# EUROPEAN PATENT SPECIFICATION

(11) **EP 2 066 146 B1**
(45) Date of publication and mention of the grant of the patent: **06.11.2013**
(21) Application number: 09155416.2
(22) Date of filing: 07.12.2000
(51) Int. Cl.: H04W 84/12, H04W 4/16, H04W 28/06, H04W 88/14, H04W 88/08

(54) **Flexible wireless LAN architecture based on a communication server**
Architektur für ein flexibles drahtloses LAN, basierend auf einen Kommunikationsserver
Architecture de réseau local sans fil flexible basée sur un serveur de communication

(30) Priority: 08.12.1999 US 457624
(43) Date of publication of application: 03.06.2009
(62) Divisional of application: 00983998.6
(73) Proprietor: Symbol Technologies, Inc., Holtsville, NY 11742 (US)
(72) Inventor: Grau, Juan, Redwood City, CA 94061 (US); Reynolds, Russell R., Los Gatos, CA 95033 (US); Mim, Reiner, Santa Clara, CA 95051 (US)
(74) Representative: Kopf, Korbinian Paul

(56) References cited:
- EP-A- 0 930 766
- WO-A-93/07684
- WO-A1-99/37047
- US-A- 5 852 405
- US-A- 5 870 385
- US-A- 5 958 006

## Description

The present invention relates to wireless Local Area Network (LAN) systems. LANs are typically used to interconnect personal computers or workstations within an office. Computers connected to the LAN communicate among each other and to specialized devices such as file servers and printers.

Wired LAN systems can present problems due to wire routing difficulties, installation time and mobility requirements. Wireless LANs have been devised to allow for a wireless interconnection to computer devices and peripherals.

Wireless LAN systems can fully replace or extend a wired LAN. In the latter case, access points are typically used to create the interconnection between the wireless and the wired portion of the LAN. Between the remote devices and access points, radio frequency transmissions are typically used. These transmissions are often done using an unlicensed radio frequency band, such as 2.4 GHz-2.4835 GHz, 5.15 GHz-5.35 GHz or 5.725 GHz-5.825 GHz.

Relatively weak transmissions on the unlicensed frequency bands are sufficient to communicate between the remote devices and the access points since the wireless LANs are geographically limited.

Although a single access point can support a relatively large group of remote devices, it functions only within a finite range of typically several hundred feet. Extended coverage areas can be accomplished by installing multiple access points with overlapping coverage cells, so that remote devices can roam throughout the area without ever losing network contact. A typical wireless LAN can use up to hundreds of access points, and thus the cost of the access points can strongly influence the cost of the entire system.

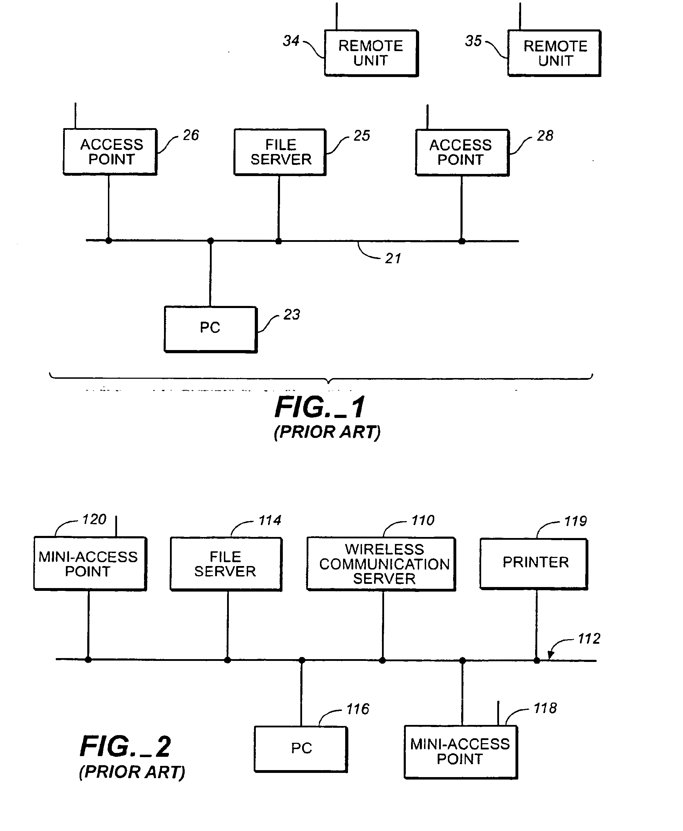

Figure 1 illustrates a prior art system for a wireless LAN using access points. A backbone 21 comprising conventional network elements such as hubs and switches is connected to the access points 26 and 28. Data coming from devices such as file server 25 on the backbone 21 goes to the access points 26 and 28. The correct access point then transmits the data to the desired remote unit 34 or 35. Such a wireless LAN arrangement requires a relatively complex and expensive access point, since many functions are duplicated in all of the access points.

In order to provide transparent connectivity between the computers on the wired LAN and the remote units, an access point processes all packets on its backbone interface. Access points usually look at the destination address of each data packet, and consult internal tables to determine whether the packet should be received and forwarded out its wireless interface. Data that is not forwarded is, in effect, filtered out. As fast data backbones such as 100Mbit Fast Ethernet become more common, the ability to process and filter data packets at the appropriate wire speed requires a relatively complex access point. This is despite the fact that the access point's effective throughput may remain limited by the slower wireless link connection.

Other operations typically placed in the access points, such as management and security functions, further drive up the memory size and processing power requirements of the access points. Typically, a security table is stored in each access point indicating the remote units which are authorized to transmit data through to the LAN. Since many table entries (and a variety of other data) are typically duplicated on each access point, some of the electronics in the access points is utilized inefficiently, further driving up the total cost of the wireless infrastructure.

The majority of access points on the market today are fixed-configuration single-radio systems. Another type of prior art system is based on modular multi slot access points. Multi-slot access points use multiple radio card slots that allow for multiple radio transceivers. The use of more than one radio transceiver can increase the access point's bandwidth or provide increased radio flexibility. In particular, since multi-slot access points are modular, the transceiver units can be upgraded with future technology allowing for higher data rates. Unfortunately different transceiver unit implementations vary widely not only in terms of performance, but also coverage range. To compensate for the significant range loss that usually ensues with a higher data rate transceiver, additional access points need to be installed to avoid coverage holes. In most cases, a completely new site survey will be required to determine the ideal location of both the additional and the existing access points. The other downside of the modular multi-slot access points is that they tend to be bulky and expensive. In many cases, the access points' locations for optimal wireless LAN coverage are in areas that are hard to reach, such as roof rafters. To allow for maintenance of these complex access points, they are typically placed in an easy to reach location and a coaxial antenna cable is used to connect the respective antenna to the access point. This allows the antenna to be placed in the optimal-but hard to access-location while minimizing maintenance concerns. Due to the close proximity of the individual radio transceivers in a multi-slot access point, it may be necessary to install external antennas with additional separation between the antennas to avoid undesired interference effects, even if the access point itself can be positioned in the ideal location. In both cases, expensive, stiff, and relatively uncommon co-axial antenna cable extensions are required.

Document EP 0 930 766 A describes a wireless local area network for digital radio communication between remote devices and a PBX telephone system, wherein the remote devices can access and use the voice message features in the PBX and the data bases on a host computer and servers.

### SUMMARY OF THE PRESENT INVENTION

The invention is according to appended claims. The present disclosure discloses a wireless LAN system including a wireless communication server and one or more access points operably connected to the wireless communication server. The access points are adapted to wirelessly transmit and receive data to and from remote units using radio frequency communications such that the remote units form part of a wireless LAN. The wireless communication server is physically separate from the access points. The wireless communication server maintains centralized filtering and forwarding of data to be transmitted to the remote units.

The disclosure further discloses a method of directing data to a remote unit in a wireless LAN. In a wireless communication server, network data is analyzed to determine, from a remote unit identification, a desired access point to transmit the data. The wireless communication server is adapted to select the desired access point from a number of possible access points.

In the wireless communication server, the data is redirected to the correct access point. In an access point, data is wirelessly transmitted to the remote unit using a radio frequency communication link. The wireless communication server is physically separate from the access point.

### BRIEF DESCRIPTION OF THE DRAWINGS

Figure 1 is a diagram of a prior art wireless LAN system.
Figure 2 is a diagram illustrating one embodiment of a wireless communication server and mini-access points connected to a wired LAN backbone.
Figure 3 is a diagram of the wireless LAN system of one embodiment of the present invention.
Figure 4 is a diagram that illustrates the operation of data transfer between the external network and a remote unit in one embodiment of the present invention.
Figure 5 is a diagram of one embodiment of a wireless communication server connected to access points through dedicated connection elements.
Figure 6 is a diagram of one embodiment of a wireless communication server directly connected to access points (built-in hub).
Figure 7 is a diagram illustrating a wireless communication server of one embodiment of the present invention.
Figure 8 is a diagram illustrating a mini-access point of one embodiment of the present invention.
Figure 9 is a diagram illustrating a wireless LAN system of one embodiment of the present invention connected to use multiple wireless communication servers as backup systems or to achieve higher mini-access point densities.

### DETAILED DESCRIPTION OF THE PREFERRED EMBODIMENT

Overview One embodiment of the present invention is a wireless LAN architecture where functionality previously provided by a single prior art access point device is divided into two separate devices. The first device is an apparatus with the main purpose to convert the wired medium information into a wireless medium. This device is called an access point (or mini-access point) and it converts information between the wired Ethernet medium and a radio frequency medium, although other wired and wireless media options are possible. The second device performs most of the networking functions, including certain processing-intensive functions commonly placed into access points in prior art wireless LAN systems. In a preferred embodiment of this invention, this device is called a wireless communication server. The core functions of the wireless communication server are the centralized filtering of unnecessary data and the forwarding of the relevant data to the correct mini-access point. Additional functions that can be placed in the wireless communication server include mini-access point management, security, quality of service (QoS), load balancing, and others.

Generally speaking, the wireless communication server centralizes in one device certain common functions found in multiple access points in prior art, freeing one or multiple mini-access points from having to perform these functions.

A relatively large number of the mini-access points can be controlled by a single wireless communication server. This way, the hardware and software necessary to perform these functions no longer needs to be duplicated in all the access points of an installation. Consequently, the use of a wireless communication server allows for the mini-access points to be made less complex, less power consumptive, and smaller, significantly reducing the total system cost. The reduced power consumption of the mini-access points makes it possible to supply DC power to the mini-access points remotely over a few of the wires of a data wire bundle.

Eliminating the AC power outlet dependency combined with its reduced form factor allows the mini-access point to be positioned at the optimal location for the antenna, removing the need for an additional co-axial antenna extension.

The mini-access point and the wireless communication server are typically physically connected together by an interconnection system comprised of conventional network elements such as hubs, switches, routers, and the like.

Some of these elements, such as hubs, can be integrated into the wireless communication server, or alternatively, external network elements can be leveraged. In a preferred embodiment, the wireless communication server can be implemented as a cost-effective single-port solution that connects to a backbone.

The mini-access points may also be connected to the backbone, or to the wireless communication server via a dedicated LAN segment. The existing conventional wired network elements provide a two-way communications path between the mini-access points and the wireless communication server and between the wireless communication server and the backbone. The interconnection system can also use a variety of physical media standards such as Ethernet, Fast Ethernet, Asynchronous Transfer Mode (ATM), Fiber Distributed Data Interface (FDDI), Token-Ring, and other present and future local area physical and link layer standards. By leveraging industry-standard interconnection components, installation complexity can be greatly reduced.

The wireless communication server logically communicates with the mini-access points via standard data networking protocols. Information exchanged between the wireless communication server and the mini-access points can be categorized as management information or data information. Management information is information generated at either the wireless communication server or the mini-access point and destined to either the wireless communication server or mini-access points. Data information is information generated elsewhere in the network, passing through the wireless communication server and eventually a mini-access point and destined to devices elsewhere in the network. Data information travelling between the wireless communication server and the mini-access point may, for example, be encapsulated in Transmission Control Protocol/ Internet Protocol (TCP/IP) or SubNetwork Access Protocol/Service Access Point (SNAP/SAP) frames. This alleviates the need for expensive filtering functionality on the mini-access points. Also, using standards-based transport mechanisms allows management or data information to flow through a wide range of standards-based interconnection systems. Once again, this greatly reduces the complexity of the installation process as well as its cost since the interconnection system is usually already in place in many installations or is readily available from a wide range of component suppliers.

In a preferred embodiment, the wireless communication server monitors all the data information passing through the network. If it determines that some of the data is destined to a device on the wireless network, it will receive such data and re-transmit it directly to the most appropriate mini-access point. That mini-access point will then convert the data to the wireless medium and deliver it to the_destination device. Data that is not directed to the wireless network is filtered out by the wireless communication server. In a preferred embodiment, the mini-access point is only required to receive data or management information directed to it. It is not required to monitor the wired network for data destined to other devices on the wireless or wired network. On the other hand, data transmitted by a wireless device will be received by the most appropriate mini-access point which will convert the data to the wired medium and direct it to the wireless communication server. Once again, it is not required that the mini-access point examines the data to determine where to send it. In this preferred embodiment, the mini-access point will always send this data to the wireless communication server. The wireless communication server will then receive that data from the mini-access point and forward it to the proper destination.

As stated above, in a preferred embodiment of the present invention the filtering is done in a centralized manner in the wireless communication server.

The wireless communication server examines the data on the network for data to be sent to a remote unit. The filtering in the wireless communication server is preferably done based on a remote unit identification. In a preferred embodiment, the layer 2 (data link layer) address of the remote unit is used as the remote unit identification.

The data for the remote unit is forwarded to the correct mini-access point.

In one embodiment, the data is encapsulated in a frame that adds the correct mini-access point address to the data. The mini-access point wirelessly transmits the forwarded data to the remote unit without needing to examine the data for a remote unit identification. Although different remote units are associated with the mini-access point at different times, the mini-access point needs only look for the unchanging mini-access point address in the frame encapsulating the data. The filtering function is thus centralized in the wireless communication server rather than at the mini-access points.

Typically, a wireless communication server is first installed by connecting it to the existing LAN infrastructure. Then mini-access points are added by also connecting them to the LAN infrastructure. In a preferred embodiment, the wireless communication server automatically detects the appearance of a mini-access point on the network and takes control over it. However, it is also possible to first deploy mini-access points, and to install the wireless communication server at a later time. Once installed, the wireless communication server can discover mini-access points present on the network and take control over them. In a preferred embodiment, the process of taking control minimally encompasses forcing all or most data traffic to and from the mini-access point to come from the wireless communication server, or to be directed to the wireless communication server. In addition, management information for the mini-access point would come from or go to the wireless communication server.

Multiple wireless communication servers can preferably be operational on a wireless LAN at the same time. In a preferred embodiment, a mechanism exists to allow one wireless communication server to back-up another and to take over in a failure situation.

Another aspect of the wireless communication server is to provide a platform that allows the integration of multiple different wireless media technologies, for example complying with different vendors' wireless media standards, into a unified wireless network. By centralizing most of the networking and management features, it is possible to have mini-access points with different wireless media capabilities attached to a single wireless communication server.

For example, there could be one particular area of an installation using applications that require higher data rates. It would then be possible to install higher performance, but more costly mini-access points on an as-needed basis only, and allow these to share a wireless communication server with any existing, legacy performance mini-access points. Other than the data rate differences, in a preferred embodiment the user would see equivalent functionality from the legacy and the high performance mini-access point. This is because most of the intelligence functions reside in the wireless communication server. Such an integration provides a great benefit to network administrators by allowing them to maintain one common look and feel of the wireless network, regardless of the type of mini-access point and wireless media standard used. Furthermore, it makes it easy for users to expand the wireless network with additional mini-access points without requiring special training and lengthy qualification, which is again due to the fact that most of the relevant functionality-from a network administrators perspective-resides in the wireless communication server. Because of these characteristics, the present invention also provides a clean and simple migration path from the wireless media technologies of today to new, potentially more powerful wireless media technologies of tomorrow. The user can simply add mini-access points to those areas where the new technology is desired, while leaving the existing legacy mini-access points in operation and without disrupting the existing wireless network.

Figure 2 is a diagram illustrating a wireless communication server 110, and mini-access points 118 and 120 connected to a wired backbone 112. The LAN backbone 112 may include hubs, switches and the like. Also shown are file server 114, personal computer 116, and printer 119. The wireless communication server 110 and mini-access points, 118 and 120, can be placed anywhere on the wired LAN backbone. The example of Fig. 2 uses a single-port wireless communication server in which the wireless communication server 110 both receives data from the wired infrastructure and sends data to the mini-access points using the same port.

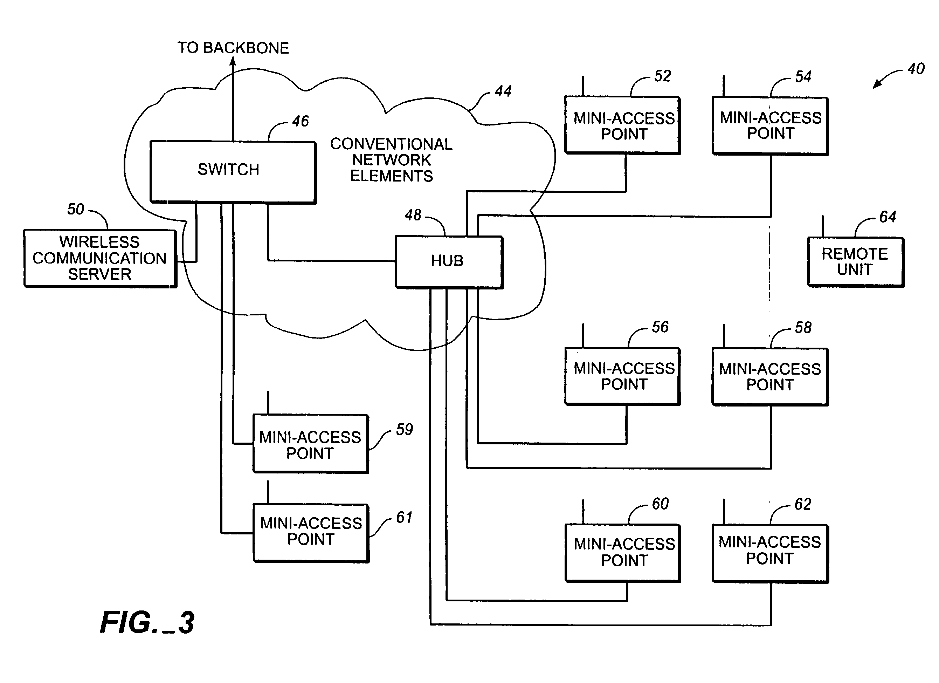

Figure 3 illustrates a wireless LAN system 40 of the present invention.

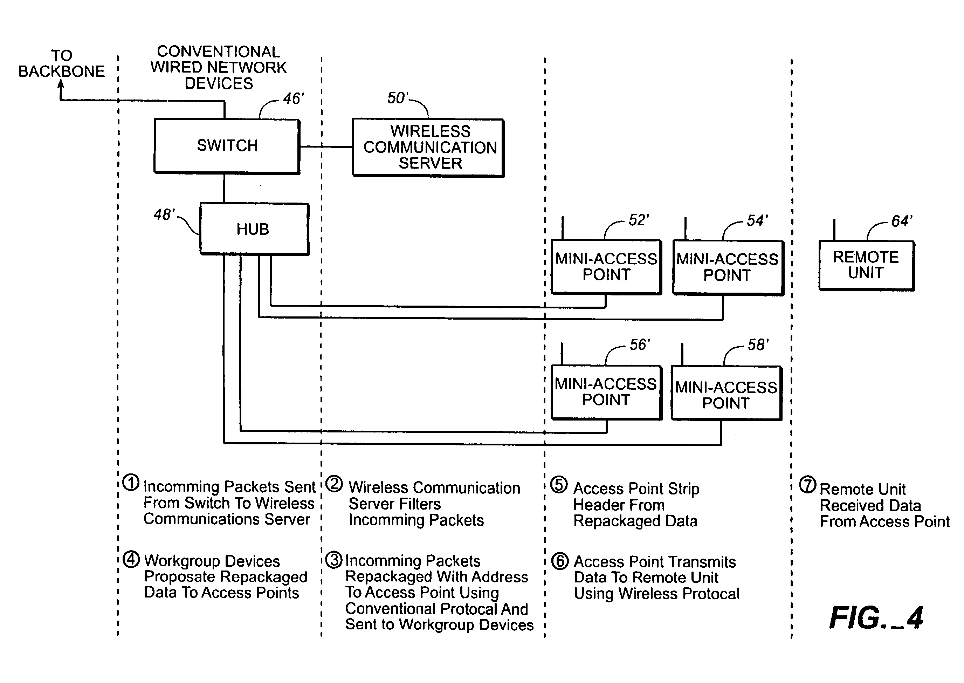

Conventional network elements 44, which in this example include switch 46 and hub 48, connect to a LAN backbone. A variety of conventional wired network elements can be used with the present invention. Typically, these wired network elements are OSI model level 3 or below. The wireless communication server 50 is connected to these conventional network elements 44. Mini-access points 52, 54,56,58,59,60,61 and 62 are also connected to the conventional network elements. A remote unit such as remote unit 64 can wirelessly communicate with the mini-access points. As described in Figure 4 below, data from the backbone is sent to the switch 46, which directs all data traffic destined for the remote units to the wireless communication server 50. The wireless communication server 50 uses a destination table to determine which mini-access point the desired remote unit is associated with, and then redirects the data to that mini-access point. In this embodiment, the data is sent from the wireless communication server 50 to the switch 46, hub 48 and the mini-access point. The mini-access point can then transmit the data to the remote unit without requiring a table lookup to determine whether to forward the data. Since the mini-access point does not need to process a table, its complexity is reduced significantly. The wireless communication server 50 preferably also contains the security tables for the system since all the data coming to and from the remote units is sent to the wireless communication server.

One manner of forwarding the data by the wireless communication server is by repackaging the data (frame encapsulation). Alternately, frame translation or any other redirecting method can be used.

The conventional wired network elements 44 allow for great flexibility in connecting a relatively large number of mini-access points to the wireless communication server, as well as for the setting up of additional wireless communication servers.

Note that the system in Figure 3 can be arranged such that the connection to the mini-access point is done at a lower connection speed than the connection to the wireless communication server. This allows for an even less expensive wireless access point.

Figure 4 illustrates a diagram showing an example of the data transfer for one embodiment of the system of Figure 2. Data coming from the backbone is sent to the conventional network devices. The data is sent from the switch 46'to the wireless communication server 50'. The wireless communication server 50' processes the incoming packet. The wireless communication server 50'examines the remote unit address and determines whether to forward or filter the packet. If the packet is to be forwarded, it determines from the remote unit address the correct mini-access point to be sent the data. In one embodiment, the data is repackaged to be transmitted to the mini-access point. The data is sent from the wireless communication server 50'to the switch 46'to the hub 48'and then data is propagated by the hub 48'to all of the mini-access points 52', 54', 56'and 58'.

The mini-access points examine the redirected packet data for the mini-access point address. The mini-access point address is fixed for each mini-access point so this check does not require a table look-up. The mini-access point then transmits the data to the remote unit using a conventional wireless protocol. The remote unit 64 receives the data from the mini-access point. Data can be sent back to the backbone by transmitting from the remote unit to the mini-access point, hub 48', switch 46', to the wireless communication server 50'. If so, the wireless communication server 50'checks to see whether the data should be transmitted to the wired network or to another remote unit. If the data is destined for the wired network, it then transmits the data to the switch 46', and from there to the backbone. If the data is destined to a remote unit, it repackages the data and sends it to the appropriate mini-access point.

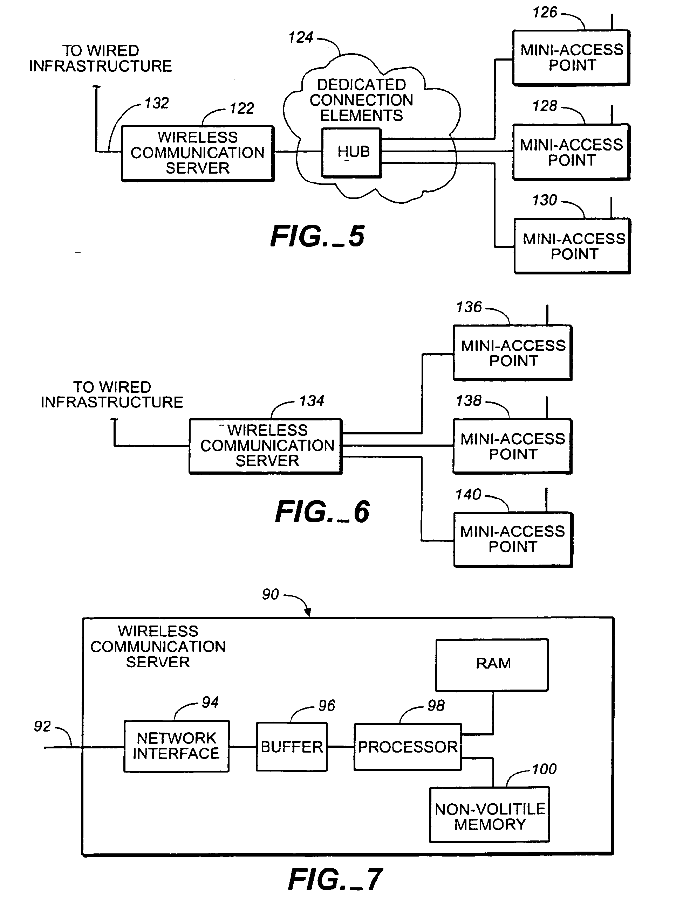

Figure 5 is a diagram of a wireless communication server 122 connected by using dedicated connection elements 124 to mini-acces points 126,128 and 130.

The wireless communication server 122 is connected to the wired infrastructure along line 132. The dedicated connection elements 124 may be conventional connection elements including switches, hubs and the like or they can be specially designed connecting units. The example of Fig. 5 uses a two-port wireless communication server in which data is received from a wired infrastructure using one port and data sent to the mini-access points using another port.

Figure 6 is a diagram of a wireless communication server 134 directly connected to mini-access points 136,138 and 140. The wireless communication server 134 is a multi-port wireless communication server in which more than one port is used to connect to the mini-access points. The wireless communication server 134 has an internal, built-in hub or switch that allows this multiple port connection system.

One advantage of the system of Figs. 5 and 6 is, that in those systems the wireless communication server can supply power to the mini-access points using otherwise unused wires in the data wire bundle between the wireless communication server and the mini-access points. This arrangement helps in positioning the mini-access point to create optimum wireless coverage independent of the availability of AC power sockets.

Figure 7 illustrates a diagram of one embodiment of a wireless communication server 90 for use with the present invention. Port 92 is connected to a network interface 94. Network interface 94 loads data into and from buffer 96. The processor 98 uses instructions stored in memory 100 to control the packet processing operations. The memory 100 stores the functional library code for doing the core functions (filtering and data redirecting) as well as any optional implemented functions (security, QoS, load balancing, access point management).

The optional network management interface code allows for user control and configuration of the wireless communication server using a Web server, Simple Network Management Protocol (SNMP), a serial controller protocol or other protocol. A system state memory section in memory 100 stores the required network state information, such as destination tables, authorization and security tables and the like.

The wireless communication server of Figure 7 shows a single network port 92. A multi-port wireless communication server can be produced by adding a built-in hub to the wireless communication server.

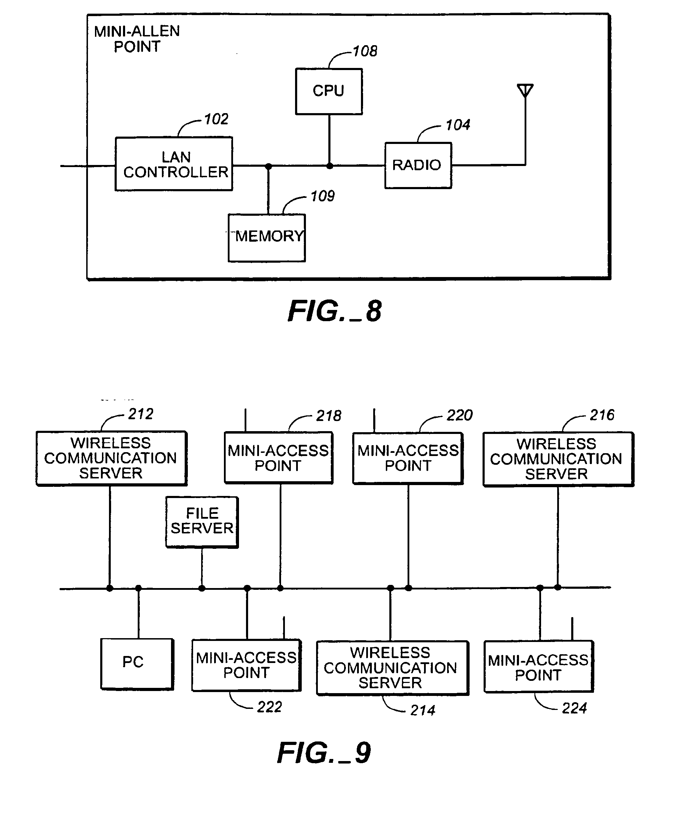

Figure 8 illustrates a diagram of one embodiment of a mini-access point of the present invention. A LAN controller 102 is connected to a radio 104, central processing unit (CPU) 108, and memory 109. A relatively inexpensive CPU 108 connected to a relatively small memory 109 can do the reduced functions of the mini-access point. These functions can include checking the data packets to see if the data packet addresses the mini-access point for transmission; the wireless communication server auto-detect function and the reduced-function stand-alone operation. The CPU need not be able to do the computationally intense filtering operations using a destination table that stores which remote units are associated with the mini-access point.

One important advantage of the system of Figs. 7 and 8 is, that in a preferred embodiment the wireless communication server can support a mix of mini-access points with different types of radios 104. Since the mini-access point controls the wireless protocol, the wireless communication server can be flexible enough to allow future upgrades of the wireless infrastructure to higher data rate radio technology. Furthermore, the flexibility provided by the conventional interconnection system allows to create a new high data rate capable infrastructure in a design specifically suited to the range of the high data rate transceiver units and antennas.

Figure 9 illustrates a wireless LAN of the present invention using multiple wireless communication servers 212,214, and 216. These wireless communication servers can receive duplicate data from the system such that each wireless communication server stores the destination and security tables for the entire system. Each wireless communication server is responsible for a subset of the mini-access points. For example, wireless communication server 212 is responsible for mini-access points 218 and 220 and wireless communication server 214 is responsible for mini-access points 222 and 224. If one of the wireless communication servers such as wireless communication server 214 fails, another wireless communication server, such as wireless communication server 212 can take over responsibility for the transmitting of data to and from the mini-access points 222 and 224. The arrangement of Figure 9 with multiple wireless communication servers connected into the conventional network allows for an easy duplication of the functions of the wireless communication server. By using a backup wireless communication server, the reliability of the entire system is improved.

It will be appreciated by those of ordinary skill in the art that the invention can be implemented in other specific forms. For example, the conventional wire protocol can be Ethernet, Fast Ethernet, Gigabit Ethernet, Token Ring, ATM or any other conventional network protocol including other IEEE 802 standards. The wired network can also use converters which can convert the wired protocol during signaling between the wired communication server and the mini-access point. The presently disclosed embodiments are therefore considered in all respects to be illustrative and not restrictive. The scope of the invention is illustrated by the appended claims rather than the foregoing description, and all changes which come within the meaning and range for equivalence thereof are intended to be embraced herein.

## Claims

1. A wireless Local Area Network system (40) comprising:
at least one wired-network element (44,46,48);
a wireless communication server (50) operably connected to the at least one wired-network element (44,46,48); and
one or more access points (52,54,56,58,59,60,61,62) operably connected to the wireless communication server (50) through the wired-network element (44,46,48),
wherein the access points (52,54,56,58,59,60,61,62) are connected to the wired-network element (44,46,48) via a network connection;
the access points (52,54,56,58,59,60,61,62) adapted to wirelessly transmit and receive data to and from one or more remote units (64) using a radio frequency communications such that the remote units (64) form part of a wireless Local Area Network in accordance with a wireless standard communication protocol and the access points (52,54,56,58,59,60,61,62) are operable such that they need not examine a remote unit identification associated with the remote units in order to determine whether to transmit the data,
wherein the wireless communication server (50) is physically separate from the access points (52,54,56,58,59,60,61,62) and is adapted to perform centralized filtering and forwarding of data transmitted to and received from the remote units (64) by analyzing network data to determine from the remote unit identification a desired access point to transmit the data, and is adapted to select a desired access point from a number of possible access points and adapted to forward data to the desired access point;
**characterized in that** the wireless communication server acts as a centralized security system for the access points (52,54,56,58,59,60,61,62).

2. The wireless Local Area Network system of Claim 1, wherein the wireless communication server (50) is adapted to act as a centralized management system for the access points (52,54,56,58,59,60,61,62).

3. The wireless Local Area Network system of Claim 1, wherein the wireless communication server (50) is adapted to concurrently operate with multiple access points (52,54,56,58,59,60,61,62) utilizing different wireless media types and/or data rates.

4. The wireless Local Area Network system of Claim 1, further comprising at least one additional wireless communication server (50).

5. The wireless Local Area Network system of Claim 1, wherein the at least one wired network element (44,46,48) includes a hub.

6. The wireless Local Area Network system of Claim 1, wherein the access points (52,54,56,58,59,60,61,62) are connected to the at least one wired-network via an Ethernet connection.

7. The wireless Local Area Network system of Claim 1, wherein the at least one wired network element (44,46,48) includes a router.

8. A method of directing data to a remote unit in a wireless Local Area Network in accordance with a wireless standard communication protocol using access points (52,54,56,58,59,60,61,62) and remote units (64), comprising:
in a wireless communication server (50) which is physically separate from the access point (52,54,56,58,59,60,61,62), analyzing network data to determine, from a remote unit (64) identification, a desired access point (52,54,56,58,59,60,61,62) to transmit the data, the wireless communication server (50) being adapted to select the desired access point (52,54,56,58,59,60,61,62) from a number of possible access points (52,54,56,58,59,60,61,62) and to act as a centralized security system for the access points (52,54,56,58,59,60,61,62);
in the wireless communication server (50), forwarding the data to the desired access point (52,54,56,58,59,60,61,62) through at least one wired-network element (44,46,48);
in an access point (52,54,56,58,59,60,61,62), wirelessly transmitting the data to the remote unit (64) using a radio frequency communication link, wherein the network data is filtered by the wireless communication server (50) such that the access point (52,54,56,58,59,60,61,62) needs not examine the remote unit (64) identification to determine whether to transmit the data.

9. The method of Claim 8, further comprising the step of, in the wireless communication server (50), examining the data to determine whether the remote unit (64) is authorized to receive data from the Local Area Network.

10. The method of Claim 8, further comprising, in the access point (52,54,56,58,59,60,61,62), sensing whether a wireless communication server (50) is associated with the network.

11. The method of Claim 8, further comprising, in the wireless communication server (50), sensing whether an access point (52,54,56,58,59,60,61,62) is associated with the network.

12. The method of Claim 8, wherein the wireless communication server (50) uses a destination table to associate a remote unit (64) with an access point (52,54,56,58,59,60,61,62).

13. The method of Claim 8, wherein the forwarding step comprises frame translation or encapsulation.

14. The method of Claim 8, wherein the at least one additional wireless communication server (50) takes control for the access points (52,54,56,58,59,60,61,62) upon failure of the first wireless communication server (50).

## Patentansprüche

1. Wireless Local Area Network-System (40), das Folgendes umfasst:
mindestens ein Leitungsnetzwerkselement (44, 46, 48);
einen Drahtloskommunikationsserver (50), der mit dem mindestens einen Leitungsnetzwerkselement (44, 46, 48) wirkverbunden ist; und
einen oder mehrere Zugangspunkte (52, 54, 56, 58, 59, 60, 61, 62), die mit dem Drahtloskommunikationsserver (50) über das Leitungsnetzwerkselement (44, 46, 48) wirkverbunden sind,
wobei die Zugangspunkte (52, 54, 56, 58, 59, 60, 61, 62) mit dem Leitungsnetzwerkselement (44, 46, 48) über eine Netzwerkverbindung verbunden sind;
wobei die Zugangspunkte (52, 54, 56, 58, 59, 60, 61, 62) dafür ausgelegt sind, Daten drahtlos zu bzw. von einer oder mehreren räumlich abgesetzten Einheiten (64) mittels einer Hochfrequenzkommunikation zu senden und zu empfangen, dergestalt, dass die räumlich abgesetzten Einheiten (64) Teil eines Wireless Local Area Network gemäß einem Drahtlos-Standardkommunikationsprotokoll bilden und die Zugangspunkte (52, 54, 56, 58, 59, 60, 61, 62) dergestalt funktionieren, dass sie keine Identifikation von räumlich abgesetzten Einheiten, die den räumlich abgesetzten Einheiten zugeordnet sind, zu überprüfen brauchen, um festzustellen, ob die Daten gesendet werden sollen,
wobei der Drahtloskommunikationsserver (50) physisch von den Zugangspunkten (52, 54, 56, 58, 59, 60, 61, 62) getrennt ist und dafür ausgelegt ist, ein zentralisiertes Filtern und Weiterleiten von Daten, die zu den räumlich abgesetzten Einheiten (64) gesendet und von den räumlich abgesetzten Einheiten (64) erhalten werden, auszuführen, indem Netzwerkdaten analysiert werden, um anhand der Identifikation von räumlich abgesetzten Einheiten einen gewünschten Zugangspunkt zum Senden der Daten zu bestimmen, und dafür ausgelegt ist, einen gewünschten Zugangspunkt aus einer Anzahl möglicher Zugangspunkte auszuwählen, und dafür ausgelegt ist, Daten zu dem gewünschten Zugangspunkt weiterzuleiten;
**dadurch gekennzeichnet, dass** der Drahtloskommunikationsserver als ein zentralisiertes Sicherheitssystem für die Zugangspunkte (52, 54, 56, 58, 59, 60, 61, 62) fungiert.

2. Wireless Local Area Network-System nach Anspruch 1, wobei der Drahtloskommunikationsserver (50) dafür ausgelegt ist, als ein zentralisiertes Managementsystem für die Zugangspunkte (52, 54, 56, 58, 59, 60, 61, 62) zu fungieren.

3. Wireless Local Area Network-System nach Anspruch 1, wobei der Drahtloskommunikationsserver (50) dafür ausgelegt ist, zeitgleich mit mehreren Zugangspunkten (52, 54, 56, 58, 59, 60, 61, 62) unter Nutzung verschiedener drahtloser Medienarten und/oder Datenraten zu arbeiten.

4. Wireless Local Area Network-System nach Anspruch 1, das des Weiteren mindestens einen zusätzlichen Drahtloskommunikationsserver (50) umfasst.

5. Wireless Local Area Network-System nach Anspruch 1, wobei das mindestens eine Leitungsnetzwerkselement (44, 46, 48) einen Hub enthält.

6. Wireless Local Area Network-System nach Anspruch 1, wobei die Zugangspunkte (52, 54, 56, 58, 59, 60, 61, 62) mit dem mindestens einen Leitungsnetzwerk über eine Ethernet-Verbindung verbunden sind.

7. Wireless Local Area Network-System nach Anspruch 1, wobei das mindestens eine Leitungsnetzwerkselement (44, 46, 48) einen Router enthält.

8. Verfahren zum Lenken von Daten zu einer räumlich abgesetzten Einheit in einem Wireless Local Area Network gemäß einem Drahtlos-Standardkommunikationsprotokoll unter Verwendung von Zugangspunkten (52, 54, 56, 58, 59, 60, 61, 62) und räumlich abgesetzten Einheiten (64), das Folgendes umfasst:
in einem Drahtlos-Kommunikationsserver (50), der physisch von dem Zugangspunkt (52, 54, 56, 58, 59, 60, 61, 62) getrennt ist, Analysieren von Netzwerkdaten, um anhand einer Identifikation einer räumlich abgesetzten Einheit (64) einen gewünschten Zugangspunkt (52, 54, 56, 58, 59, 60, 61, 62) zum Senden der Daten zu bestimmen, wobei der Drahtloskommunikationsserver (50) dafür ausgelegt ist, den gewünschten Zugangspunkt (52, 54, 56, 58, 59, 60, 61, 62) aus einer Anzahl möglichr Zugangspunkte (52, 54, 56, 58, 59, 60, 61, 62) auszuwählen und als ein zentralisiertes Sicherheitsystem für die Zugangspunkte (52, 54, 56, 58, 59, 60, 61, 62) zu fungieren;
in dem Drahtloskommunikationsserver (50), Weiterleiten der Daten zu dem gewünschten Zugangspunkt (52, 54, 56, 58, 59, 60, 61, 62) durch mindestens ein Leitungsnetzwerkselement (44, 46, 48);
in einem Zugangspunkt (52, 54, 56, 58, 59, 60, 61, 62), drahtloses Senden der Daten zu der räumlich abgesetzten Einheit (64) unter Verwendung einer Hochfrequenz-Kommunikationsverbindung, wobei die Netzwerkdaten durch den Drahtloskommunikationsserver (50) so gefiltert werden, dass der Zugangspunkt (52, 54, 56, 58, 59, 60, 61, 62) nicht die Identifikation der räumlich abgesetzten Einheit (64) zu überprüfen braucht, um festzustellen, ob die Daten gesendet werden sollen.

9. Verfahren nach Anspruch 8, das des Weiteren den Schritt umfasst, in dem Drahtloskommunikationsserver (50) die Daten zu überprüfen, um festzustellen, ob die räumlich abgesetzte Einheit (64) berechtigt ist, Daten von dem Local Area Network zu empfangen.

10. Verfahren nach Anspruch 8, das des Weiteren umfasst, in dem Zugangspunkt (52, 54, 56, 58, 59, 60, 61, 62) zu detektieren, ob dem Netzwerk ein Drahtloskommunikationsserver (50) zugeordnet ist.

11. Verfahren nach Anspruch 8, das des Weiteren umfasst, in dem Drahtloskommunikationsserver (50) zu detektieren, ob dem Netzwerk ein Zugangspunkt (52, 54, 56, 58, 59, 60, 61, 62) zugeordnet ist.

12. Verfahren nach Anspruch 8, wobei der Drahtloskommunikationsserver (50) eine Zielorttabelle verwendet, um eine räumlich abgesetzte Einheit (64) einem Zugangspunkt (52, 54, 56, 58, 59, 60, 61, 62) zuzuordnen.

13. Verfahren nach Anspruch 8, wobei der Weiterleitungsschritt eine Frameübersetzung oder - verkapselung umfasst.

14. Verfahren nach Anspruch 8, wobei der mindestens eine zusätzliche Drahtloskommunikationsserver (50) die Steuerung für die Zugangspunkte (52, 54, 56, 58, 59, 60, 61, 62) übernimmt, wenn der erste Drahtloskommunikationsserver (50) ausfällt.

## Revendications

1. Système de réseau local sans fil (40) comprenant :
au moins un élément de réseau câblé (44, 46, 48) ;
un serveur de communication sans fil (50) connecté de manière opérationnelle au dit au moins un élément de réseau câblé (44, 46, 48) ; et
un ou plusieurs points d'accès (52, 54, 56, 58, 59, 60, 61, 62) connectés de manière opérationnelle au serveur de communication sans fil (50) par l'intermédiaire de l'élément de réseau câblé (44, 46, 48),
dans lequel les points d'accès (52, 54, 56, 58, 59, 60, 61, 62) sont connectés à l'élément de réseau câblé (44, 46, 48) par l'intermédiaire d'une connexion de réseau ;
les points d'accès (52, 54, 56, 58, 59, 60, 61, 62) étant conçus pour transmettre et recevoir par une liaison sans fil des données à et à partir d'une ou de plusieurs unités à distance (64) en utilisant des communications radiofréquences de sorte que les unités à distance (64) fassent partie d'un réseau local sans fil selon un protocole de communication standard sans fil et que les points d'accès (52, 54, 56, 58, 59, 60, 61, 62) puissent être utilisés de sorte qu'ils ne doivent pas examiner une identification d'unité à distance associée aux unités à distance afin de déterminer s'il faut transmettre ou non les données,
dans lequel le serveur de communication sans fil (50) est séparé physiquement des points d'accès (52, 54, 56, 58, 59, 60, 61, 62) et est conçu pour effectuer un filtrage et un acheminement centralisés des données transmises et reçues à et à partir des unités à distance (64) en analysant les données de réseau pour déterminer, à partir de l'identification d'unité à distance, un point d'accès souhaité pour transmettre les données, et est conçu pour sélectionner un point d'accès souhaité parmi un certain nombre de points d'accès possibles et conçu pour acheminer les données vers le point d'accès souhaité ;
**caractérisé en ce que** le serveur de communication sans fil agit en tant que système de sécurité centralisé pour les points d'accès (52, 54, 56, 58, 59, 60, 61, 62).

2. Système de réseau local sans fil selon la revendication 1, dans lequel le serveur de communication sans fil (50) est conçu pour agir en tant que système de gestion centralisé pour les points d'accès (52, 54, 56, 58, 59, 60, 61, 62).

3. Système de réseau local sans fil selon la revendication 1, dans lequel le serveur de communication sans fil (50) est conçu pour fonctionner simultanément avec de multiples points d'accès (52, 54, 56, 58, 59, 60, 61, 62) en utilisant différents types de supports sans fil et/ou débits de données.

4. Système de réseau local sans fil selon la revendication 1, comprenant en outre au moins un serveur de communication sans fil (50) supplémentaire.

5. Système de réseau local sans fil selon la revendication 1, dans lequel ledit au moins un élément de réseau câblé (44, 46, 48) comprend un concentrateur.

6. Système de réseau local sans fil selon la revendication 1, dans lequel les points d'accès (52, 54, 56, 58, 59, 60, 61, 62) sont connectés au dit au moins un réseau câblé par l'intermédiaire d'une connexion Ethernet.

7. Système de réseau local sans fil selon la revendication 1, dans lequel ledit au moins un élément de réseau câblé (44, 46, 48) comprend un routeur.

8. Procédé pour diriger des données vers une unité à distance dans un réseau local sans fil selon un protocole de communication standard sans fil en utilisant des points d'accès (52, 54, 56, 58, 59, 60, 61, 62) et des unités à distance (64), comprenant :
dans un serveur de communication sans fil (50) qui est séparé physiquement du point d'accès (52, 54, 56, 58, 59, 60, 61, 62), l'analyse de données de réseau pour déterminer, à partir d'une identification de l'unité à distance (64), un point d'accès (52, 54, 56, 58, 59, 60, 61, 62) souhaité pour transmettre les données, le serveur de communication sans fil (50) étant conçu pour sélectionner le point d'accès (52, 54, 56, 58, 59, 60, 61, 62) souhaité parmi un certain nombre de points d'accès (52, 54, 56, 58, 59, 60, 61, 62) possibles et pour agir en tant que système de sécurité centralisé pour les points d'accès (52, 54, 56, 58, 59, 60, 61, 62) ;
dans le serveur de communication sans fil (50), l'acheminement des données vers le point d'accès (52, 54, 56, 58, 59, 60, 61, 62) souhaité par l'intermédiaire d'au moins un élément de réseau câblé (44, 46, 48) ;
dans un point d'accès (52, 54, 56, 58, 59, 60, 61, 62), la transmission par une liaison sans fil des données à l'unité à distance (64) en utilisant une liaison de communication radiofréquence, dans lequel les données de réseau sont filtrées par le serveur de communication sans fil (50) de sorte que le point d'accès (52, 54, 56, 58, 59, 60, 61, 62) ne doive pas examiner l'identification de l'unité à distance (64) pour déterminer s'il faut transmettre ou non les données.

9. Procédé selon la revendication 8, comprenant en outre l'étape, dans le serveur de communication sans fil (50), d'examen des données pour déterminer si l'unité à distance (64) est autorisée à recevoir des données du réseau local.

10. Procédé selon la revendication 8, comprenant en outre, dans le point d'accès (52, 54, 56, 58, 59, 60, 61, 62), la détection si un serveur de communication sans fil (50) est associé ou non au réseau.

11. Procédé selon la revendication 8, comprenant en outre, dans le serveur de communication sans fil (50), la détection si un point d'accès (52, 54, 56, 58, 59, 60, 61, 62) est associé au réseau.

12. Procédé selon la revendication 8, dans lequel le serveur de communication sans fil (50) utilise une table de destinations pour associer une unité à distance (64) à un point d'accès (52, 54, 56, 58, 59, 60, 61, 62).

13. Procédé selon la revendication 8, dans lequel l'étape d'acheminement comprend une conversion ou une encapsulation de trame.

14. Procédé selon la revendication 8, dans lequel ledit au moins un serveur de communication sans fil (50) supplémentaire prend le contrôle des points d'accès (52, 54, 56, 58, 59, 60, 61, 62) lors d'une défaillance du premier serveur de communication sans fil (50).
